# EUROPEAN PATENT SPECIFICATION

(11) **EP 1 857 944 B1**
(45) Date of publication and mention of the grant of the patent: **06.07.2016**
(21) Application number: 06113950.7
(22) Date of filing: 15.05.2006
(51) Int. Cl.: G06F 17/30, H04L 29/08

(54) **Information search dependent on the position and direction of a portable electronic device**
Informationssuche in Abhängigkeit von der Position und der Ausrichting eines tragbaren elektronischen Geräts
Recherche d'informations en fonction de la position et de la direction d'un dispositif électronique portable

(43) Date of publication of application: 21.11.2007
(60) Divisional application: 16168846.0
(73) Proprietor: BlackBerry Limited, Waterloo, ON N2K 0A7 (CA)
(72) Inventor: Blommesteijn, Nicholas, Ottawa Ontario K2A 1Z1 (CA)
(74) Representative: Moore, Barry

(56) References cited:
- US-A1- 2002 103 911
- US-A1- 2003 040 324
- US-B1- 6 496 776

## Description

The present disclosure relates to a portable electronic device, in particular, a method for sorting and displaying data on the portable electronic device.

It is becoming increasingly common to use resources available through the Internet to search for phone numbers, directions or other information that is associated with a geographical location. Websites such as canada411 ™, 411.ca™, MapQuest™ and Google™, for example, are very popular and many other websites offering similar services are also available.

The number of searchable fields on most websites is quite limited, however, and in some cases performing a search using a website may not be much quicker than performing a manual search using a telephone directory or a map. For example, when searching for a person or business having a common name, multiple pages of results must be viewed before the correct person or business is located. Similarly, using online maps can be quite slow particularly if a user has limited information about their desired location.

US-A-2002/0130911 discloses a server apparatus comprising an information bubble management unit. Items to be retrieved in a search each have an associated information bubble. The bubbles are used for advertising purposes and are therefore priced according to bubble size. The items are searched using a retrieval vector. Only bubbles intersected by the vector are retrieved during a search and therefore, from the viewpoint of the advertiser, a bigger bubble is more likely to be retrieved in searches.

US-B-6,496,776 discloses a method of providing location-centric information to a user of a mobile device. The device is pointed at a location of interest, the position of the device is determined and information relating to the location is sent to the device from a remote server. Alternatively information relating to several locations in the vicinity may be provided.

There is disclosed herein a method of sorting and displaying data on a portable electronic device according to claim 1.

Advantageous features are provided in the dependent claims.

There is further disclosed herein a portable electronic device according to claim 9.

There is further disclosed herein a computer program product for sorting and displaying data on a portable electronic device comprising a computer readable medium embodying program code means executable in a computing device, system or apparatus for implementing the method as described above.

### BRIEF DESCRIPTION OF THE DRAWINGS

The embodiments will be better understood with reference to the following Figures in which like numerals denote like parts and in which:
Figure 1 is a functional block diagram of a communication system for a portable electronic device according to an embodiment;
Figure 2 is a functional block diagram of certain components the portable electronic device of Figure 1;
Figure 3 is a flowchart showing operation of an embodiment of a sorting system for the portable electronic device of Figure 2;
Figure 4 is a schematic overhead view of the portable electronic device of Figure 2;
Figure 5 is a front view of the portable electronic device of Figure 2; and
Figure 6 is a flowchart showing operation of another embodiment of a sorting system for the portable electronic device of Figure 2.

### DESCRIPTION OF PREFERRED EMBODIMENTS

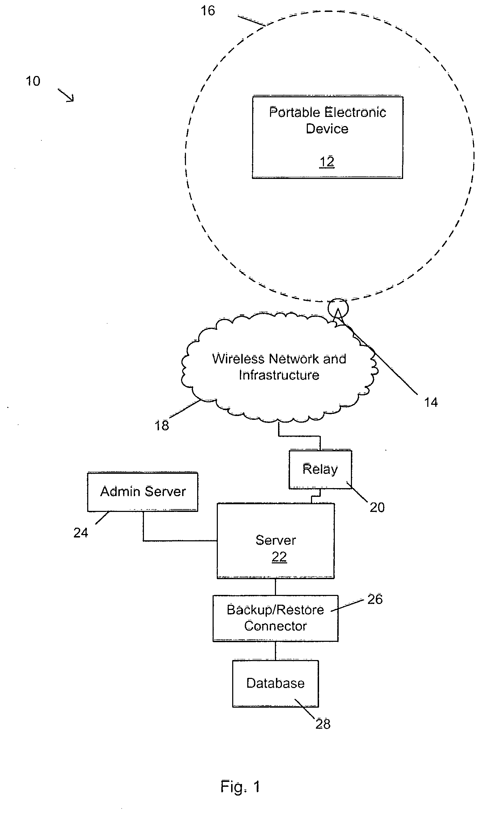

Referring to Figure 1, a functional block diagram of a communication system 10 and a portable electronic device 12 is generally shown. The portable electronic device 12 and the communication system 10 are operable to effect communications over a radio communications channel therebetween.

For the purpose of illustration, the communication system 10 is functionally represented in Figure 1 and includes a base station 14. Base station 14 defines a coverage area, or cell 16 within which communications between the base station 14 and the portable electronic device 12 can be effected. It will be appreciated that the portable electronic device 12 is movable within cell 16 and can be moved to coverage areas defined by other cells, including those that are not illustrated in the present example.

The base station 14 is part of a wireless network and infrastructure 18 that provides a link to the portable electronic device 12. The wireless network and infrastructure 18 includes additional base stations (not shown) that provide the other cells referred to above. Data is delivered to the portable electronic device 12 via wireless transmission from base station 14. Similarly, data is sent from the portable electronic device 12 via wireless transmission to the base station 14.

Wireless networks and infrastructures include, for example, data-centric wireless networks, voice-centric wireless networks, or dual-mode wireless networks. For the purpose of the present exemplary embodiment, the wireless network and infrastructure 18 includes a dual-mode wireless network that supports both voice and data communications over the same physical base stations.

The communication system 10 further includes a relay device 20 that is connected to the wireless network and infrastructure 18 and to a server 22. It will be understood that the functions provided by the relay device 20 and the server 22 can be embodied in the same device. The server 22 is also connected to an administration server 24, as shown. The administration server 24 provides administrative services to and control over the server 22.

The server 22 is also functionally coupled through a connector 26 to a backup/restore database 28. Other connectors and databases can be provided, for example, for synchronization purposes. The connector 26 receives commands from the server 22. It will be understood that the connector 26 is a functional component and can be provided by way of an application on the server 22. The backup/restore database 28 is used for storing data records, including, for example, copies of Short Message Service (SMS) or Personal Identification Number (PIN) messages sent from the portable electronic device 12.

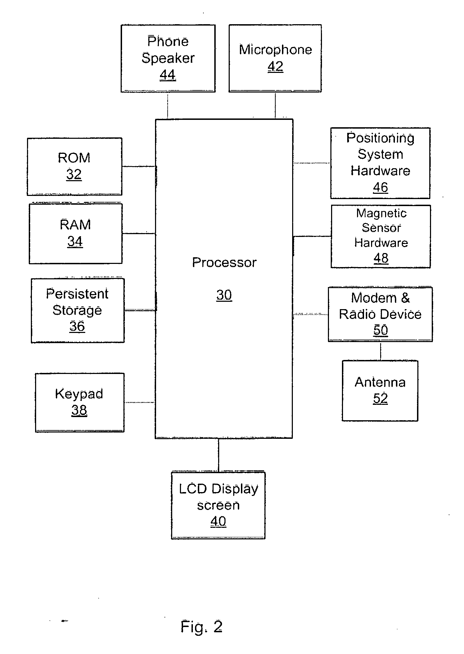

Referring now to Figure 2, a block diagram of certain components within the portable electronic device 12 is shown. In the present embodiment, the portable electronic device 12 is based on the computing environment and functionality of a wireless personal digital assistant (PDA). It will be understood, however, that the portable electronic device 12 is not limited to a wireless personal digital assistant. Other portable electronic devices are possible, such as cellular telephones, smart telephones, and laptop computers. Referring again to the present embodiment, the portable electronic device 12 is based on a microcomputer including a processor 30 connected to a read-only-memory (ROM) 32 that contains a plurality of applications executable by the processor 30 that enables the portable electronic device 12 to perform certain functions including, for example, PIN message functions, SMS message functions and cellular telephone functions. The processor 30 is also connected to a random access memory unit (RAM) 34 and a persistent storage device 36 which are responsible for various non-volatile storage functions of the portable electronic device 12. The processor 30 receives input from various input devices including a keypad 38. The processor 30 outputs to various output devices including an LCD display screen 40. A microphone 42 and phone speaker 44 are connected to the processor 30 for cellular telephone functions. The processor 30 is also connected to positioning system hardware 46, magnetic sensor hardware 48 and a modem and radio device 50. The modem and radio device 50 is used to connect to wireless networks using an antenna 52. The modem and radio device 50 transmits and receives voice and data communications to and from the portable electronic device 12 through the antenna 52.

The portable electronic device 12 is operable to effect two way communication of voice and data. Thus, the portable electronic device 12 transmits and receives voice and data communications over the wireless network and infrastructure 18 via wireless communications with the base station 14 over a radio communications channel.

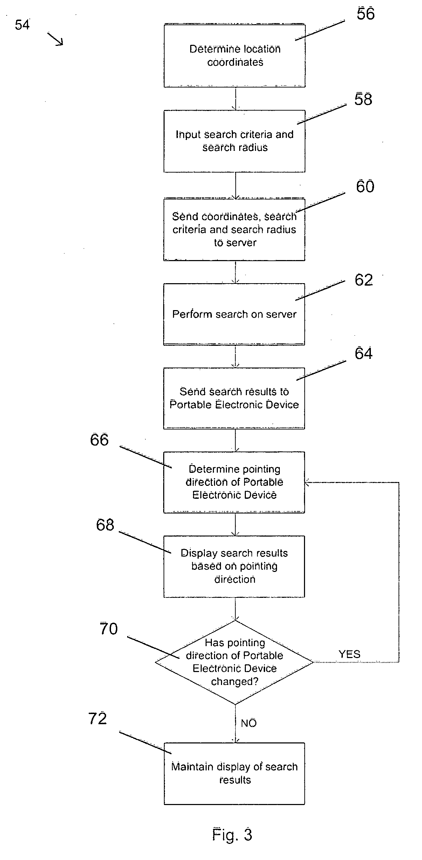

Referring to Figures 3, 4 and 5, operation of a sorting system 54 for the portable electronic device 12 is generally shown. The geographical location of the portable electronic device 12 is first determined at step 56 by a receiver (not shown), which is included in the positioning system hardware 46. The receiver uses Global Positioning System (GPS) or Assisted GPS technology to determine the geographical location coordinates of the portable electronic device 12 in a manner that is well known in the art and therefore will not be described further here. The geographical location coordinates may alternatively be determined using another suitable type of positioning technology, such as signal strength from base stations, for example.

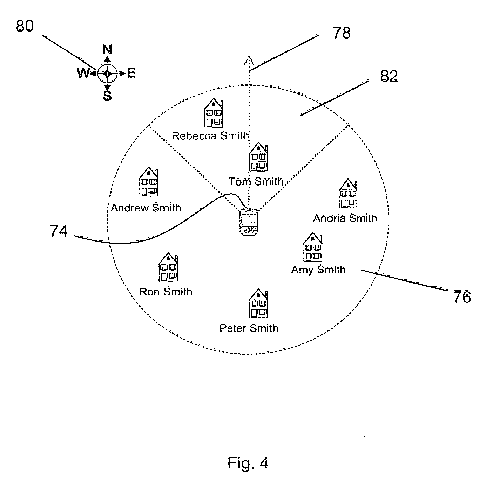

At step 58, a user inputs search criteria and a search radius into the portable electronic device 12. This is generally performed using the keypad 38, however, another input means, such as a touch sensitive screen having character recognition capability, for example, may be used. Types of search criteria include a last name for a telephone number search or a category such as "restaurants" or "medical clinics", for example. As shown in Figure 4, the search radius that is input by the user is measured from the geographical location of the portable electronic device 12 and defines a circular area 76 within which the search is conducted. The user may set the search radius to a default value in order to avoid having to input this value every time a search is performed. It will be appreciated that step 58 may be performed before, after or at the same time as step 56.

At step 60, the geographical location coordinates of the portable electronic device 12, the search criteria and the search radius are sent to the server 22 through the wireless network and infrastructure 18, as previously described. A search is then performed by the server 22 in a records database, which includes records that are mapped to geographical locations, as indicated at step 62. The search results are then returned to the portable electronic device 12 at step 64.

The records database includes information relating to categories such as residences, businesses, government offices and/or landmarks, for example. A record for a restaurant may include: the name of the restaurant, the address of the restaurant, the phone number of the restaurant, the type of food served, and the geographical location coordinates associated with the restaurant. Records databases that are suitable for use with the present embodiment may be licensed from several different companies, including Navteq™, for example.

In the present embodiment, the server 22 is in communication with at least one records database. The records database may be a separate database or may be incorporated into the backup/restore database 28.

At step 66, a pointing direction 78 of a forward end 74 of the portable electronic device 12 is determined. The magnetic sensor hardware 48 includes an electronic compass (not shown) for providing the direction information. As shown in Figure 4, the pointing direction 78 is north, as indicated by north arrow 80. The pointing direction 78 is used to define a search area within the circular area 76 for which results are desired. In this embodiment, the search area is a sector 82 of the circular area 76. The sector size is generally a default value, such as 45° on either side of the pointing direction, for example. The sector size may alternatively be specified by the user at the time of each new search.

In one embodiment, the electronic compass includes magnetic sensor HMC1041Z, which is manufactured by Honeywell. Other suitable magnetic sensors manufactured by Honeywell or other manufacturers may alternatively be used.

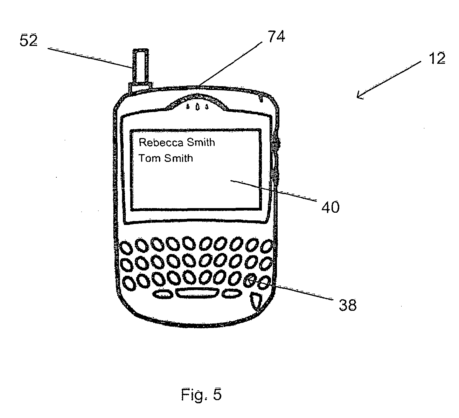

The search results are then displayed on the portable electronic device 12 based on the pointing direction 78, as indicated at step 68. In the example of Figures 4 and 5, a search was performed to retrieve records of persons having the last name "Smith". As shown in Figure 4, the search results returned a total of seven records, however, only two records, specifically "Rebecca Smith" and "Tom Smith", are located within the sector 82. Therefore, as shown in Figure 5, only those two records are displayed on the LCD display screen 40 for the user to view.

The magnetic sensor hardware 48 provides the portable electronic device 12 with continuous updates of the pointing direction 78. If the pointing direction 78 changes, as indicated at step 70, steps 66 and 68 are repeated as shown in Figure 3. If a new search area, which is defined by a new pointing direction, does not include the locations of the records: "Rebecca Smith" and "Tom Smith", these records will no longer be displayed. Instead, records that are located within the new search area will be displayed. If the pointing direction 78 does not change, the original display will be maintained, as indicated at step 72.

Displaying results within a search area that is determined based on the pointing direction 78 of a user's portable electronic device 12 is particularly useful for a user who is driving down a one-way street or for a user who is on his/her way to another destination and wishes to find a restaurant, for example, that is on the way without having to backtrack. In addition, by knowing only the general direction in which a desired search result is located, a user is able to greatly reduce the number of hits returned by a search.

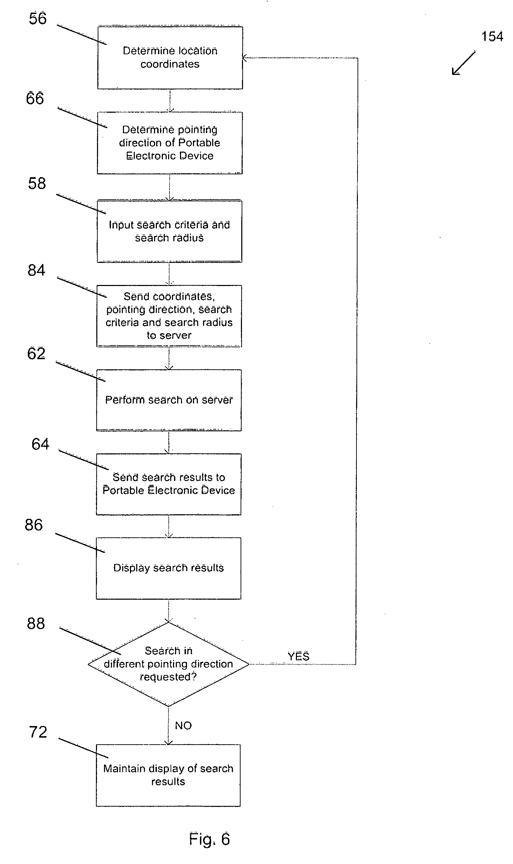

Operation of another embodiment of a sorting system 154 is shown in Figure 6. This embodiment is similar to the embodiment of Figure 3, however, the pointing direction 78, which is determined at step 66, is sent to the server 22 along with the geographical location coordinates, the search criteria and the search radius, as indicated at step 84. Thus, the search results that are returned to the portable electronic device 12 and then displayed at step 86 are limited to records that are located within the search area, which is defined by the pointing direction 78. If results from another search area are desired, as indicated at step 88, then a new search is performed starting at step 56, otherwise the results are maintained on the display screen 40, as indicated at step 72.

In another embodiment, the search area is a rectangle rather than a sector 82, As such, the width of the search area will remain constant as the distance from the portable electronic device 12 increases.

In yet another embodiment, the records database is stored locally on the portable electronic device 12. Therefore, no data is sent to or from the server 22 and the search is performed locally on the portable electronic device 12. Once the search has been completed, the results are displayed on the screen 40 for the user to view.

## Claims

1. A method of sorting and displaying data on a portable electronic device comprising:
determining (56) geographical coordinates of said portable electronic device;
receiving (58) a user input search criteria provided via a keypad or a touch sensitive screen of the portable electronic device into said portable electronic device,
receiving (64) results of a search performed on a server based on said search criteria, said geographical coordinates, and a search radius originating at said geographical coordinates of said portable electronic device sent to said server;
on receipt of the search results, determining (66) a pointing direction of said portable electronic device using magnetic sensor hardware of said portable electronic device;
limiting, on the portable electronic device, the received results to a subset of records that are associated with a location within a search area that is defined by the pointing direction of said portable electronic device;
displaying (68) the subset of records on a display screen of said portable electronic device.

2. A method as claimed in claim 1, wherein, where said pointing direction of said portable electronic device changes to a new pointing direction, the method further comprises displaying at least one result of said search having geographic coordinates located within a new area associated with said new pointing direction.

3. A method as claimed in claim 1 or claim 2 further comprising;
performing said search in a database on said server based on said search criteria, said search resulting in a list of database records.

4. A method as claimed in claim 1 wherein said results received by said portable electronic device from said server are a list of database records.

5. A method as claimed in any preceding claim wherein said search area is a sector of a circle that is defined by said search radius.

6. A method as claimed in any preceding claim, wherein said pointing direction is a pointing direction of a forward end of said portable electronic device.

7. A method as claimed in any preceding claim, wherein said search criteria further comprises at least one search parameter.

8. A method as claimed in claim 7 when dependent on claim 4, wherein said search parameter is a category of said database records.

9. A portable electronic device comprising:
positioning system hardware for determining geographical coordinates of said portable electronic device;
magnetic sensor hardware for determining a pointing direction of said portable electronic device;
a keypad or a touch sensitive screen for receiving a user input search criteria;
a processor configured to carry out the method steps of any preceding claim; and
a screen for displaying said results.

10. A computer program product for sorting and displaying data on a portable electronic device comprising a computer readable medium embodying program code means executable in a computing device, system or apparatus for implementing the method of any one of claims 1 to 8.

## Patentansprüche

1. Ein Verfahren zum Sortieren und Anzeigen von Daten auf einer tragbaren elektronischen Vorrichtung, das aufweist:
Bestimmen (56) von geographischen Koordinaten der tragbaren elektronischen Vorrichtung;
Empfangen (58) von Benutzereingabesuchkriterien, die über eine Tastatur oder einen berührungsempfindlichen Bildschirm der tragbaren elektronischen Vorrichtung in die tragbare elektronische Vorrichtung vorgesehen werden;
Empfangen (64) von Ergebnissen einer Suche, die auf einem Server durchgeführt wird basierend auf den Suchkriterien, den geographischen Koordinaten und einem Suchradius, der an den geographischen Koordinaten der tragbaren elektronischen Vorrichtung beginnt, an den Server gesendet;
bei Empfang der Suchergebnisse, Bestimmen (66) einer Zeigerichtung der tragbaren elektronischen Vorrichtung unter Verwendung von Magnetsensor-Hardware der tragbaren elektronischen Vorrichtung;
Begrenzen, auf der tragbaren elektronischen Vorrichtung, der empfangenen Ergebnisse auf einen Teilsatz von Datensätzen, die mit einem Ort in einem Suchbereich assoziiert sind, der durch die Zeigerichtung der tragbaren elektronischen Vorrichtung definiert ist;
Anzeigen (68) des Teilsatzes von Datensätzen auf einem Anzeigebildschirm der tragbaren elektronischen Vorrichtung.

2. Ein Verfahren gemäß Anspruch 1, wobei, wenn sich die Zeigerichtung der tragbaren elektronischen Vorrichtung in eine neue Zeigerichtung ändert, das Verfahren weiter aufweist ein Anzeigen zumindest eines Ergebnisses der Suche mit geographischen Koordinaten, die sich in einem neuen Bereich befinden, der mit der neuen Zeigerichtung assoziiert ist.

3. Ein Verfahren gemäß Anspruch 1 oder Anspruch 2, das weiter aufweist:
Durchführen der Suche in einer Datenbank auf dem Server basierend auf den Suchkriterien, wobei die Suche zu einer Liste von Datenbankdatensätzen führt.

4. Ein Verfahren gemäß Anspruch 1, wobei die Ergebnisse, die von der tragbaren elektronischen Vorrichtung von dem Server empfangen werden, eine Liste von Datenbankdatensätzen sind.

5. Ein Verfahren gemäß einem vorhergehenden Anspruch, wobei der Suchbereich ein Sektor eines Kreises ist, der durch den Suchradius definiert ist.

6. Ein Verfahren gemäß einem vorhergehenden Anspruch, wobei die Zeigerichtung eine Zeigerichtung eines vorderen Endes der tragbaren elektronischen Vorrichtung ist.

7. Ein Verfahren gemäß einem vorhergehenden Anspruch, wobei die Suchkriterien weiter zumindest einen Suchparameter aufweisen.

8. Ein Verfahren gemäß Anspruch 7, wenn abhängig von Anspruch 4, wobei der Suchparameter eine Kategorie der Datenbankdatensätze ist.

9. Eine tragbare elektronische Vorrichtung, die aufweist:
Positionssystem-Hardware zum Bestimmen von geographischen Koordinaten der tragbaren elektronischen Vorrichtung;
Magnetsensor-Hardware zum Bestimmen einer Zeigerichtung der tragbaren elektronischen Vorrichtung;
eine Tastatur oder einen berührungsempfindlichen Bildschirm zum Empfangen von Benutzereingabesuchkriterien;
einen Prozessor, der konfiguriert ist zum Ausführen der Verfahrensschritte gemäß einem vorhergehenden Anspruch; und
einen Bildschirm zum Anzeigen der Ergebnisse.

10. Ein Computerprogrammprodukt zum Sortieren und Anzeigen von Daten auf einer tragbaren elektronischen Vorrichtung, aufweisend ein computerlesbares Medium mit Programmcodemitteln, die in einer Computervorrichtung, einem System oder einer Vorrichtung ausführbar sind zum Implementieren des Verfahrens gemäß einem der Ansprüche 1 bis 8.

## Revendications

1. Procédé de tri et d'affichage de données sur un dispositif électronique portable, comprenant le fait :
de déterminer (56) des coordonnées géographiques dudit dispositif électronique portable ;
de recevoir (58) une entrée par un utilisateur de critères de recherche, fournie par l'intermédiaire d'un clavier ou d'un écran tactile du dispositif électronique portable, dans ledit dispositif électronique portable,
de recevoir (64) des résultats d'une recherche effectuée sur un serveur sur la base desdits critères de recherche, desdites coordonnées géographiques, et d'un rayon de recherche généré au niveau desdites coordonnées géographiques dudit dispositif électronique portable envoyés audit serveur ;
de déterminer (66), à la réception des résultats de recherche, une direction d'orientation dudit dispositif électronique portable en utilisant un matériel de capteur magnétique dudit dispositif électronique portable ;
de limiter, sur le dispositif électronique portable, les résultats reçus à un sous-ensemble d'enregistrements qui sont associés à un emplacement dans une zone de recherche qui est définie par la direction d'orientation dudit dispositif électronique portable ;
d'afficher (68) le sous-ensemble d'enregistrements sur un écran d'affichage dudit dispositif électronique portable.

2. Procédé tel que revendiqué dans la revendication 1, dans lequel, lorsque ladite direction d'orientation dudit dispositif électronique portable change en une nouvelle direction d'orientation, le procédé comprend en outre le fait d'afficher au moins un résultat de ladite recherche ayant des coordonnées géographiques situées à l'intérieur d'une nouvelle zone associée à ladite nouvelle direction d'orientation.

3. Procédé tel que revendiqué dans la revendication 1 ou 2, comprenant en outre le fait ;
d'effectuer ladite recherche dans une base de données sur ledit serveur sur la base desdits critères de recherche, ladite recherche conduisant à une liste d'enregistrements de base de données.

4. Procédé tel que revendiqué dans la revendication 1, dans lequel lesdits résultats reçus par ledit dispositif électronique portable à partir dudit serveur sont une liste d'enregistrements de base de données.

5. Procédé tel que revendiqué dans l'une des revendications précédentes, dans lequel ladite zone de recherche est un secteur d'un cercle qui est défini par ledit rayon de recherche.

6. Procédé tel que revendiqué dans l'une des revendications précédentes, dans lequel ladite direction d'orientation est une direction d'orientation d'une extrémité avant dudit dispositif électronique portable.

7. Procédé tel que revendiqué dans l'une des revendications précédentes, dans lequel lesdits critères de recherche comprennent en outre au moins un paramètre de recherche.

8. Procédé tel que revendiqué dans la revendication 7 lorsqu'elle dépend de la revendication 4, dans lequel ledit paramètre de recherche est une catégorie desdits enregistrements de base de données.

9. Dispositif électronique portable comprenant :
un matériel de système de positionnement pour déterminer des coordonnées géographiques dudit dispositif électronique portable ;
un matériel de capteur magnétique pour déterminer une direction d'orientation dudit dispositif électronique portable ;
un clavier ou un écran tactile pour recevoir une entrée par un utilisateur de critères de recherche ;
un processeur configuré pour exécuter les étapes du procédé de l'une des revendications précédentes ; et
un écran pour afficher lesdits résultats.

10. Produit de programme informatique pour trier et afficher des données sur un dispositif électronique portable comprenant un support lisible par ordinateur incorporant un moyen code de programme exécutable sur un dispositif informatique, un système ou un appareil pour la mise en oeuvre du procédé de l'une quelconque des revendications 1 à 8.
